# EUROPÄISCHE PATENTSCHRIFT

(11) **EP 2 623 348 B1**
(45) Veröffentlichungstag und Bekanntmachung des Hinweises auf die Patenterteilung: **06.09.2017**
(21) Anmeldenummer: 13153678.1
(22) Anmeldetag: 01.02.2013
(51) Int. Cl.: B60J 7/22

(54) **Windschott mit zusätzlichen Gelenken**
Wind deflector with additional joints
Pare-vent avec articulations supplémentaires

(30) Priorität: 02.02.2012 DE 102012100890
(43) Veröffentlichungstag der Anmeldung: 07.08.2013
(73) Patentinhaber: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE)
(74) Vertreter: Schlief, Thomas P.

(56) Entgegenhaltungen:
- EP-A2- 1 621 386
- EP-A2- 2 030 823
- DE-A1- 19 502 794
- DE-A1-102006 030 076

## Beschreibung

Ein Windschott für ein Personenkraftfahrzeug umfasst zumindest einen Rahmen und ein an dem Rahmen befestigtes Flachmaterial. Der zumindest eine Rahmen weist zwei einander gegenüberliegende erste Streben auf sowie zwei die beiden ersten Streben miteinander verbindende, einander gegenüberliegende zweite Streben. Im Wesentlichen mittig in den ersten Streben ist jeweils ein Klappgelenk angeordnet, welches die ersten Streben in jeweils zwei erste Strebenabschnitte unterteilt, so dass der Rahmen um eine die beiden Klappgelenke verbindende Klappachse auf die Hälfte seiner ursprünglichen Abmessungen zusammenklappbar ist.

Windschotts sind im Stand der Technik in verschiedenen Ausführungen bekannt geworden. Eine häufige Bauart eines Windschotts besteht hierbei aus einem Oberrahmen und einem Unterrahmen, wobei mittels des Unterrahmens das Windschott in dem Personenkraftfahrzeug befestigt werden kann, während der Oberrahmen das eigentliche Windschott bildet. Der Oberrahmen ist hierbei aus seiner Gebrauchsstellung hinter den Lehnen der Vordersitze in eine abgelegte Stellung auf dem Unterrahmen schwenkbar. Ein derartiges Windschott ist beispielsweise in der DE 196 16 448 A1 beschrieben. Um dieses Windschott aus seiner vollständig ausgeklappten Gebrauchsposition, in eine Aufbewahrungsposition zu überführen, wird zunächst der Oberrahmen auf dem Unterrahmen abgelegt. Das Windschott kann nun aus dem Kraftfahrzeug entnommen werden, und um eine Klappachse, welche sich im Wesentlichen mittig bezogen auf die Breite des Rahmens in der durch den Rahmen aufgespannten Ebene erstreckt, geklappt werden. Das sich nun in seiner Aufbewahrungsposition befindliche Windschott weist somit nur noch die Hälfte des ursprünglichen Platzbedarfs auf.

Die EP 2 030 823 A2 zeigt ebenfalls ein Windschott mit einem Rahmen bestehend aus einem Oberrahmen und einem Unterrahmen sowie einem Flachmaterial. Dabei sind in Längsstreben des gesamten Rahmens etwa mittig Gelenke angeordnet, die eine Klappachse ausbilden, so dass das den Oberahmen bildende Rahmenteil auf das den Unterrahmen bildende Rahmenteil abgelegt werden kann. Die Querstreben des Rahmens weisen ebenfalls jeweils ein Gelenk auf. Die Achse der Gelenke in den Querstreben erstreckt sich dabei jeweils in der durch das Flachmaterial aufgespannten Ebene bzw. in einer Ebene parallel dazu, so dass bei auf dem Unterrahmen ablegten Oberrahmen der Rahmen ein weiteres Mal zusammen geklappt werden kann.

Daneben sind vielfältige weitere Ausführungen von Windschotts bekannt geworden, welche auch aus einem einzigen Rahmen bestehen können und auf unterschiedlichste Weise in dem Fahrzeug befestigt sein,können. Es sind beispielsweise Kopfstützenschotts bekannt sowie auch eine Befestigung eines Windschotts an einem Überrollbügel oder an Seitenverkleidungen des Kraftfahrzeuges. Sämtliche der genannten Windschotts nehmen dabei in ihrer Aufbewahrungsposition noch immer zumindest in etwa die Hälfte des Platzbedarfes ein, welchen sie in im Kraftfahrzeug eingebauten Zustand benötigen.

Aufgabe der vorliegenden Erfindung ist es, ein Windschott vorzuschlagen, dessen Platzbedarf in seiner Aufbewahrungsposition weiter vermindert ist.

Die Aufgabe wird gelöst mit den Merkmalen des Anspruches 1.

Ein Windschott für ein Personenkraftfahrzeug umfasst zumindest einen Rahmen und ein an dem Rahmen befestigtes Flachmaterial. Der Rahmen weist zumindest zwei einander gegenüberliegende erste Streben auf, sowie zwei die beiden ersten Streben miteinander verbindende einander gegenüberliegende zweite Streben. Der Rahmen kann dabei eine rechteckige oder auch leicht trapezförmige Form einnehmen. Im Wesentlichen mittig in den ersten Streben ist jeweils ein Klappgelenk angeordnet, welches die ersten Streben in jeweils zwei erste Strebenabschnitte unterteilt, so dass der Rahmen um eine die beiden Klappgelenke verbindende Klappachse auf die Hälfte seiner ursprünglichen Abmessungen zusammenklappbar ist. Erfindungsgemäß ist nun vorgesehen, dass in jeder der zweiten Streben jeweils ein weiteres Gelenk angeordnet ist, welches die zweiten Streben in zwei zweite Strebenabschnitte unterteilt. Im Gegensatz zu den bekannten Gelenken erstreckt sich hierbei die Drehachse des weiteren Gelenkes außerhalb der durch den Rahmen und das Flachmaterial aufgespannten Ebene. Im Rahmen der Erfindung wird unter "außerhalb" verstanden, dass die Drehachse der Gelenke sich in einem Winkel sowohl zu der durch den Rahmen und das Flachmaterial aufgespannten Ebene als auch zu jeder zu dieser Ebene parallelen Ebene erstreckt. Hierdurch sind nach Klappung um die Klappachse die jeweils einander gegenüberliegenden ersten Strebenabschnitte des Rahmens durch Drehung um die Drehachse in eine platzsparende Aufbewahrstellung zueinander drehbar. Die Drehachse der weiteren Gelenke erstreckt sich erfindungsgemäß in einem spitzen Winkel zu der Senkrechten auf die durch den Rahmen und das Flachmaterial aufgespannten Ebene, da sich hierdurch besonders günstige Verstaumaße beim Eindrehen um die Drehachsen der weiteren Gelenke ergeben. Erfindungsgemäß sind spitze Winkel im Bereich von bis zu 20°. Erfindungsgemäß ist auch eine vollständig senkrechte Orientierung der Drehachse zu der durch den Rahmen und das Flachmaterial aufgespannten Ebene vorgesehen. Durch die erfindungsgemäße Ausführung mit zusätzlichen Gelenken in den zweiten Streben gelingt es, nachdem das Windschott in üblicher Weise auf etwa die Hälfte seiner ursprünglichen Größe zusammengeklappt ist, durch die Drehung der ersten Strebenabschnitte des Rahmens zueinander noch eine weitere Verkleinerung des Platzbedarfes zu erzielen. Nach der vorliegenden Erfindung erhält somit das Windschott durch das Drehen um die Drehachse in seiner Aufbewahrstellung eine dreieck- oder V-förmige Gesamtkontur, welche wesentlich einfacher verstaut werden kann. Hierdurch kann ein um etwa 40% reduzierter Flächenbedarf gegenüber Windschotts des Standes der Technik erreicht werden.

Besonders vorteilhaft ist hierbei weiterhin, dass verschiedene Verstaumöglichkeiten im Fahrzeug in Betracht kommen, wobei auch Nischen und Ecken in günstiger Weise genutzt werden können. Das zwischen den ersten und den zweiten Streben aufgespannte Flachmaterial wird hierbei durch die Drehung der gegenüberliegenden ersten Strebenabschnitte um die Drehachse entspannt und liegt schließlich in der platzsparenden Aufbewahrstellung gefaltet zwischen den zueinander gedrehten Rahmenabschnitten. Beim Aufdrehen der Strebenabschnitte wird das Flachmaterial wiederum selbsttätig aufgespannt.

Vorteilhaft ist es weiterhin, dass aufgrund des erheblich reduzierten Platzbedarfs das Windschott auch in günstiger Weise in einer Aufbewahrungstasche verstaut werden kann und somit vor Kratzern und Staubansetzungen geschützt werden kann.

Nach einer ersten vorteilhaften Ausführung der Erfindung ist vorgesehen, dass bei um die Klappachse zusammengeklappten Rahmen des Windschotts die Drehachsen der weiteren Gelenke in den zweiten Streben koaxial sind. Die zweiten Strebenabschnitte des Rahmens liegen somit bei um die Klappachse zusammengeklapptem Rahmen weitgehend deckungsgleich übereinander, so dass diese durch die zusammenfallende Achse in besonders einfacher und komfortabler Weise miteinander um die Drehachse in die Aufbewahrstellung gedreht werden können.

Eine besonders vorteilhafte Ausführung der Erfindung sieht vor, dass die ersten Streben sich in Einbauposition des Windschotts im Personenkraftfahrzeug im Wesentlichen in y-Richtung erstreckende Querstreben sind, welche durch die Klappgelenke in jeweils zwei Querabschnitte unterteilt sind, und dass die zweiten Streben die Querstreben verbindende Seitenstreben sind, welche durch die Gelenke in jeweils zwei Seitenabschnitte unterteilt sind. Die Erfindung lässt sich hierdurch in günstiger Weise für sämtliche herkömmlichen Bauarten von Windschotts verwenden, für welche sich mittig bezogen auf die Breitenrichtung des Windschotts bzw. des Kraftfahrzeuges die Klappachse befindet.

Bei anderen Bauarten von Windschotts, beispielsweise bei Kopfstützenschotts, kann es hingegen auch vorteilhaft sein, wenn die ersten Streben die Seitenstreben sind und sich jeweils ein Klappgelenk in den Seitenstreben befindet. Das Windschott kann hierbei der Länge nach um die sich in der durch den Windschottrahmen und das Flachmaterial aufgespannten Ebene befindliche Klappachse auf die Hälfte zusammengeklappt werden. Die weiteren Gelenke sind in diesem Fall in den Querstreben, welche die zweiten Streben bilden, angeordnet.

Eine vorteilhafte Weiterbildung der Erfindung sieht vor, dass Windschott zwei Rahmen, insbesondere einen Oberrahmen und einen Unterrahmen aufweist, die um eine Schwenkachse zueinander schwenkbar sind um den ersten Rahmen auf dem zweiten Rahmen abzulegen. Bei einem derartigen Windschott sind vorzugsweise die ersten Streben wiederum die Querstreben, so dass sich die Klappgelenke dann wiederum mittig in den Querstreben befinden. Die zweiten Streben sind wiederum die Seitenstreben, so dass das Windschott nach Klappung um die Klappachse der Klappgelenke durch Drehen um die Drehachsen noch ein weiteres Mal verkleinerbar ist.

Um nach dem Ablegen des ersten Rahmens auf den zweiten Rahmen das Windschott nun um die die Klappgelenke miteinander verbindende Klappachse zusammenzuklappen, ist es vorteilhaft, wenn zumindest das Klappgelenk eines Rahmens, vorzugsweise des Oberrahmens, als Doppelgelenk ausgeführt ist.

Nach einer ersten vorteilhaften Ausführung der Erfindung liegen in einem abgelegten Zustand des Oberrahmens auf dem Unterrahmen die Seitenstreben des Oberrahmens und des Unterrahmens jeweils aufeinander, und die Drehachsen der Gelenke des Oberrahmens sowie die Drehachsen der Gelenke des Unterrahmens sind im abgelegten Zustand koaxial. Nach Klappung des bereits einmal zusammengelegten Windschotts um die Klappachse liegen dann sämtliche Seitenstreben des Oberrahmens und des Unterrahmens aufeinander, so dass die auf- oder auch nebeneinanderliegenden Querabschnitte des Rahmens dann alle zugleich um eine einzige gemeinsame Drehachse sämtlicher weiterer Gelenke miteinander gedreht werden können. Die Bedienung des Windschotts ist hierdurch besonders komfortabel.

Nach einer anderen Ausführung der Erfindung ist es jedoch ebenso vorteilhaft, wenn in einem abgelegten Zustand des Oberrahmens auf dem Unterrahmen die Seitenstreben des Oberrahmens neben den Seitenstreben des Unterrahmens liegen, wobei die Drehachsen der Gelenke des Oberrahmens in Bezug auf die Längsrichtung der Seitenstreben ein Abstand zu den Gelenken des Unterrahmens aufweisen. Trotz dem die Drehachsen des Oberrahmens und des Unterrahmens nach Klappung nicht koaxial zueinander sind, kann dennoch das Windschott durch Drehen der jeweiligen Querabschnitte um die Drehachse verkleinert werden.

Eine vorteilhafte Weiterbildung der Erfindung sieht vor, dass die Drehachse der Gelenke in einem spitzen Winkel von bis zu 20° gegenüber der Senkrechten auf die durch den Rahmen und das Flachmaterial aufgespannte Ebene geneigt ist. Beim Eindrehen der durch die weiteren Gelenke miteinander verbundenen Strebenabschnitte sind somit die Strebenabschnitte aus der ursprünglichen, durch den Rahmen und das Flachmaterial aufgespannten Ebene geringfügig herausgeschwenkt, so dass sie im Bereich der Klappgelenke gerade aneinander vorbeigleiten können und somit noch weiter zueinander drehbar sind.

Vorteilhaft ist es weiterhin, wenn in einem abgelegten Zustand des ersten Rahmens, vorzugsweise des Oberrahmens, auf dem zweiten Rahmen, vorzugsweise dem Unterrahmen, die Außenkontur des ersten Rahmens sich zumindest überwiegend innerhalb der Außenkontur des zweiten Rahmens befindet. Der Platzbedarf des Windschotts in der Aufbewahrungsposition kann hierdurch weiter reduziert werden, da die Querabschnitte des Oberrahmens sowie die des Unterrahmens allenfalls - je nach Anordnung der Schwenkachse - im Bereich der Schwenkachse aufeinanderliegen, während sie auf der gegenüberliegenden Seite nebeneinander zu liegen kommen.

Die vorliegende Erfindung ist besonders vorteilhaft bei einem Windschott mit einem Oberrahmen und einem Unterrahmen, wobei das Klappgelenk des Unterrahmens und des Oberrahmens jeweils als Einfachgelenk ausgeführt ist, und wobei zumindest die Querabschnitte der Querstreben des Oberrahmens zumindest im abgelegten Zustand des Oberrahmens auf dem Unterrahmen einen Winkel von weniger als 180° miteinander bilden.

Mittels einer derartigen Ausgestaltung kann in vorteilhafter Weise erreicht werden, dass nach dem Ablegen des Oberrahmens auf den Unterrahmen die Achsen der Klappgelenke auf einer gemeinsamen Klappachse zu Liegen kommen und somit der Oberrahmen und der Unterrahmen um die gemeinsame Klappachse geklappt werden können. Aufwändige Doppelgelenke sind hierdurch nicht erforderlich.

Befindet sich die Außenkontur des ersten Rahmens zumindest teilweise innerhalb der Außenkontur des zweiten Rahmens, so ist es vorteilhaft, wenn der zweite Rahmen, vorzugsweise der Unterrahmen, zumindest im Bereich des Klappgelenkes eine Abstützung für den ersten Rahmen, vorzugsweise den Oberrahmen, aufweist. Durch die Abstützung kann der erste Rahmen in abgelegtem Zustand gehalten werden und stützt sich nicht auf dem Flachmaterial ab, so dass dieses geschont wird.

Weiterhin ist es vorteilhaft, wenn die Abstützung des Unterrahmens als Mitnehmer für den Oberrahmen ausgeführt ist, der bei Drehung der Strebenabschnitte, insbesondere der Querabschnitte des Unterrahmens um die Drehachse die Strebenabschnitte des Oberrahmens mitnimmt. Die Bedienung ist hierdurch besonders einfach und komfortabel, da nur ein Rahmen zum Eindrehen betätigt werden muss.

Eine andere vorteilhafte Weiterbildung der Erfindung sieht vor, dass die weiteren Gelenke des Rahmens, zumindest die weiteren Gelenke des Oberrahmens, eine Verriegelungseinrichtung aufweisen. Vorzugsweise ist die Verriegelungsvorrichtung derart ausgebildet, dass sie die zueinander drehbaren Strebenabschnitte in der vollständig ausgeklappten Gebrauchsposition des Windschotts verriegelt. Da jedoch der Rahmen bei vollständig um die Klappachse ausgeklapptem Rahmen unter einer gewissen Spannung gehalten wird, ist eine Verriegelungseinrichtung nicht unbedingt erforderlich.

Besonders vorteilhaft ist es dabei, wenn die Verriegelungseinrichtung federbelastet ist und selbsttätig verriegelbar ist. So kann das Windschott problemlos entnommen und aufgefaltet werden, wobei beim vollständigen Auffalten der Strebenabschnitte die Verriegelungseinrichtung selbsttätig nach Erreichen der Gebrauchsposition verriegelt. Alternativ oder zusätzlich kann jedoch auch eine Verriegelungsvorrichtung vorgesehen sein, welche die Strebenabschnitte in ihrer vollständig eingedrehten Aufbewahrstellung verriegelt.

Vorteilhaft ist es weiterhin, wenn die Verriegelungseinrichtung eine Betätigungseinrichtung zum Entriegeln der Verriegelungseinrichtung aufweist. Diese kann beispielsweise als federbelasteter Druckkopf ausgebildet sein. Dieser kann direkt beim Ein- oder Ausdrehen des Windschotts in einfacher Weise betätigt werden.

Um das Windschott in seiner Gebrauchsposition zu stabilisieren, ist es weiterhin vorteilhaft, wenn die beiden durch das Gelenk verbundenen Strebenabschnitte durch eine Feder miteinander verbunden sind, wobei die Feder vorzugsweise dem Drehen in die Aufbewahrstellung entgegenwirkt.

Weitere Vorteile der Erfindung werden anhand der nachfolgend dargestellten Ausführungsbeispiele beschrieben. Es zeigen:
- **Figur 1**: ein erfindungsgemäßes Windschott für ein Personenkraftfahrzeug in einer Übersichtsdarstellung,
- **Figur 2**: eine erste Ausführung eines erfindungsgemäßen Windschotts,
- **Figur 3**: eine weitere Ausführung eines erfindungsgemäßen Windschotts in einer perspektivischen Darstellung,
- **Figur 4**: das Windschott der Figur 3 in einer ersten eingefalteten Stellung,
- **Figur 5**: das Windschott der Figur 4 in einer vollständig eingefalteten Aufbewahrungsposition,
- **Figur 6**: eine andere Ausführung eines erfindungsgemäßen Windschotts in einer vollständig eingefalteten Aufbewahrposition,
- **Figur 7**: das Windschott der Figur 6 in einer Draufsicht,
- **Figur 8**: eine Detaildarstellung einer Verriegelungseinrichtung in einer Schnittdarstellung,
- **Figur 9**: eine Detaildarstellung einer Abstützung in einer Schnittdarstellung, und
- **Figur 10**: eine weitere Ausführung eines erfindungsgemäßen Windschotts in einer schematischen Darstellung.

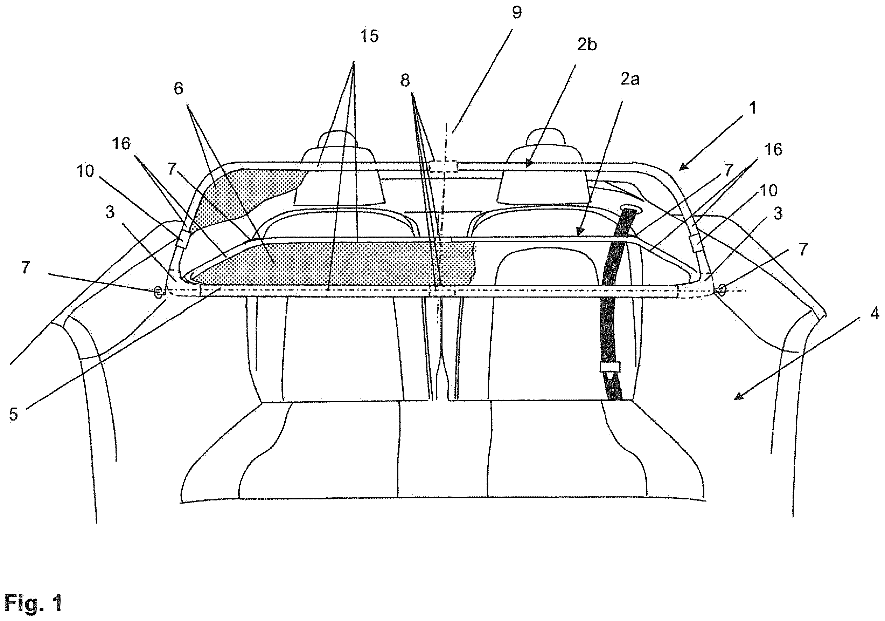

Figur 1 zeigt ein erfindungsgemäßes Windschott 1 in einer Übersichtsdarstellung in einem in ein Personenkraftfahrzeug 4 eingebauten Zustand. Das Windschott besteht vorliegend aus einem Oberrahmen 2b, welcher sich in Gebrauchsposition des Windschotts 1 im Wesentlichen senkrecht hinter den Lehnen der Vordersitze erstreckt, sowie einem Unterrahmen 2a, welcher der Befestigung des Windschotts 1 in dem Fahrzeug dient und welcher sich im Wesentlichen waagerecht über einer Fahrgastöffnung erstreckt. Oberrahmen 2b und Unterrahmen 2a sind in bekannter Weise mittels Scharnieren 3 schwenkbar miteinander verbunden. Nachdem der Oberrahmen 2b durch Schwenken um die Schwenkachse 5 auf dem Unterrahmen 2a abgelegt ist, kann das Windschott 1 aus dem Fahrzeug entnommen werden und in eine Aufbewahrposition überführt werden, wie im Folgenden noch erläutert werden wird. Jeder Rahmen 2a, 2b des Windschotts 1 ist mit einem Flachmaterial 6 bespannt. Zur Befestigung des Windschotts 1 in dem Fahrzeug dienen vordere und hintere Fixiereinrichtungen 7.

Zum Überführen des Windschotts 1 in seine Aufbewahrposition ist das vorliegend gezeigte Windschott 1 mit einem Oberrahmen 2b und einem Unterrahmen 2a zunächst in herkömmlicher Weise, nachdem der Oberrahmen 2b auf dem Unterrahmen 2a abgelegt ist, mit weitgehend mittig innerhalb der Querstreben 15 des Rahmens 2a, 2b angeordneter Klappgelenke 8 um eine Klappachse 9 klappbar und hierdurch auf die Hälfte der ursprünglichen Abmessungen des Rahmens 2a, 2b zusammenklappbar. Jeder Rahmen 2a, 2b des Windschotts 1 ist dabei aus paarweise einander gegenüberliegenden Streben 15, 16 aufgebaut. Jeder Rahmen 2a, 2b beinhaltet zwei Seitenstreben 16 sowie zwei Querstreben 15. Die Querstreben 15 sind in an sich bekannter Weise durch Klappgelenke 8 in jeweils zwei Querabschnitte 15' und 15" unterteilt und können somit um die die beiden Klappgelenke 8 verbindende Klappachse 9 zusammengefaltet werden.

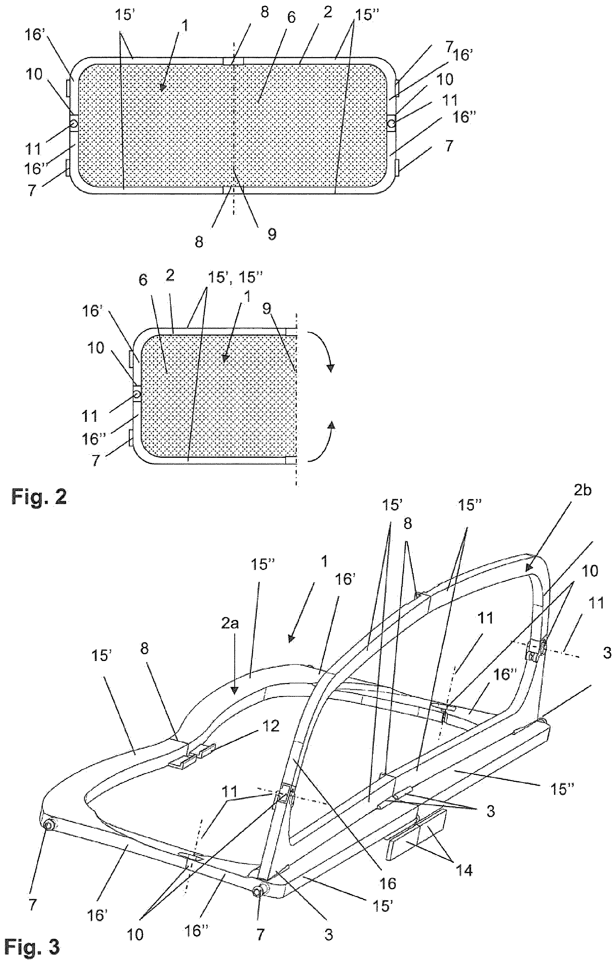

Figur 2 zeigt ein Windschott 1 einer anderen Bauart in einer schematischen Ansicht. Das Windschott 1 weist nur einen einzigen Rahmen 2 auf, welcher mit einem Flachmaterial 6 bespannt ist. Der Rahmen 2 weist zwei einander gegenüberliegende Seitenstreben 16 sowie zwei einander gegenüberliegende Querstreben 15 auf. Die Querstreben 15 sind ebenfalls in jeweils zwei Querabschnitte 15' und 15" unterteilt.

Erfindungsgemäß ist nun vorgesehen, dass zusätzlich zu den Klappgelenken 8 in den Querstreben 15, welche vorliegend die ersten Streben darstellen, auch in den Seitenstreben 16, welche vorliegend die zweiten Streben darstellen, jeweils ein weiteres Gelenk 10 angeordnet ist. Die zweiten Streben bzw. die Seitenstreben 16, werden somit durch die Gelenke 10 wiederum in jeweils zwei Seitenabschnitte 16' und 16" unterteilt. Im Unterschied zu sämtlichen bekannten Klappmechanismen bei herkömmlichen Windschotts erstreckt sich die Drehachse 11 der weiteren Gelenke 10 dabei im Wesentlichen senkrecht zu einer durch den Rahmen 2 und das Flachmaterial 6 aufgespannten Ebene. Nach Klappung des Rahmens 2 um die Klappachse 9 können somit nach der vorliegenden Erfindung die jeweils einander gegenüberliegenden Strebenabschnitte durch Drehung um die Drehachse 11, wie in der unteren Darstellung der Figur 2 durch Pfeile symbolisiert, noch zueinander gedreht werden, um das bereits zusammengeklappte Windschott 1 in eine noch platzsparende Aufbewahrstellung zu überführen. Das zwischen den Strebenabschnitten 15 aufgespannte Gewirke wird dabei zusammengefaltet.

Wie der unteren Darstellung der Figur 2 entnehmbar, verlaufen die Drehachsen 11 der beiden Gelenke 10 in den Seitenstreben 16 nach Klappung um die Klappachse 9 koaxial zueinander, so dass in günstiger Weise die einander gegenüberliegenden Querabschnitte 15', 15" zueinander gedreht werden können. Besonders vorteilhaft bei der erfindungsgemäßen Ausführung mit zusätzlichen Gelenken 10 in den Seitenstreben 16 ist es, dass aufgrund der Orientierung der Drehachse 11 im Wesentlichen senkrecht zu der Ebene des Windschotts 1 die Stabilität des Windschotts 1 in Gebrauchsstellung in keiner Weise beeinträchtigt ist. Da die Klappachse 9 der Klappgelenke 8 senkrecht zu der Drehachse 11 der weiteren Gelenke 10 steht, ist das Windschott 1 in seiner Gebrauchsposition durch die Klappgelenke 8 gegen ein Einknicken um die Drehachse 11 gesichert.

Nach der in Figur 2 gezeigten Darstellung sind dabei die ersten Streben, welche die bekannten Klappgelenke 8 aufweisen, deren Klappachse 9 innerhalb der durch den Rahmen 2 und das Flachmaterial 6 aufgespannten Ebene verläuft, die Querstreben 15. Die zweiten Streben sind vorliegend die Seitenstreben 16, in welchen erfindungsgemäß die zweiten Gelenke 10 mit einer senkrecht zur vorbenannten Ebene orientierten Drehachse 11 angeordnet sind. Nach einer hier nicht gezeigten Ausführung der Erfindung ist es natürlich ebenso möglich, dass die Klappgelenke 8 in den Seitenstreben 16 angeordnet sind, welche dann die ersten Streben bilden, und dass die weiteren Gelenke 10 in den Querstreben 15 angeordnet sind, welche dann die zweiten Streben bilden.

Figur 3 zeigt ein erfindungsgemäßes Windschott 1, welches wiederum einen Oberrahmen 2b und einen Unterrahmen 2a aufweist. Die Klappgelenke 8 sind jeweils weitgehend mittig innerhalb der Querstreben 15 der beiden Rahmen 2a, 2b angeordnet und sind nach der vorliegenden Ausführung beide als Einfachgelenke ausgeführt. Das Windschott 1 mit den Einfachgelenken 8 kann hierdurch in einfacher Weise vergleichsweise kostengünstig und wenig störanfällig ausgeführt werden. Um das Windschott 1, nachdem der Oberrahmen 2b auf dem Unterrahmen 2a abgelegt ist, dennoch um die die Gelenke 8 verbindende Klappachse 9 zusammenklappen zu können, ist der Oberrahmen 2b etwas kleiner ausgeführt als der Unterrahmen 2a, so dass in abgelegtem Zustand die Querstreben 15 bzw. die Querabschnitte 15', 15" des Oberrahmens 2b neben den Querabschnitten 15', 15" des Unterrahmens 2a zu Liegen kommen. Der Oberrahmen 2b befindet sich somit bezogen auf die Längen- und Breitenabmessungen des Windschotts 1 in abgelegtem Zustand im Wesentlichen innerhalb der Außenkontur des Unterrahmens 2a. Um dem abgelegtem Oberrahmen 2b dennoch Halt auch im Bereich der Mitte der Querstreben 15 bzw. im Bereich der Klappgelenke 8 zu geben und das aufgespannte Flachmaterial 6 nicht zu belasten, weist der Unterrahmen 2a eine Abstützung 12 für den Oberrahmen 2b auf.

Die Seitenstreben 16 des Oberrahmens 2b sowie die Seitenstreben 16 des Unterrahmens 2a liegen hingegen in abgelegtem Zustand des Oberrahmens 2b auf dem Unterrahmen 2a aufeinander, so dass die Drehachsen 11 der Gelenke 10 des Oberrahmens 2b und des Unterrahmens 2a in abgelegtem Zustand koaxial zueinander sind. Da im abgelegten Zustand des Oberrahmens 2b die Seitenstreben 16 von Oberrahmen 2b und Unterrahmen 2a jeweils aufeinander liegen, die Querstreben 15 hingegen nebeneinander liegen, ergibt sich eine leicht V-förmige Ausrichtung der Querabschnitte 15', 15" der Querstreben 15 des Oberrahmens 2b zueinander. Die Querabschnitte 15', 15" der Querstreben 15 des Oberrahmens 2b bilden somit einen Winkel von weniger 180° zueinander. In der vorliegend dargestellten Gebrauchsposition des Windschotts 1 ist dabei das V nach vorne hin geöffnet, so dass durch die nach hinten leicht ausgestellte Form des Windschotts 1 eine besonders gute Stabilität gegen angreifende Windkräfte erzielt werden kann. Zugleich wird durch diese V-förmige Ausführung des Oberrahmens 2b erreicht, dass die Achsen der Klappgelenke 8 im abgelegten Zustand des Oberrahmens 2b auf dem Unterrahmen 2a sich auf einer Linie befinden, so dass ohne ein aufwändiges Doppelgelenk wie im Stand der Technik dennoch ein gleichzeitiges Klappen um die Klappachse 9 möglich ist.

Die Drehachsen 11 der Gelenke 10 des Oberrahmens 2b und des Unterrahmens 2a liegen nach der vorliegenden Ausführung senkrecht zu der durch den Unterrahmen 2a und das Flachmaterial 6 aufgespannten Ebene. In abgelegtem Zustand des Oberrahmens 2b auf dem Unterrahmen 2a kann die durch den Oberrahmen 2b und sein Flachmaterial 6 aufgespannte Ebene geringfügig von der durch den Unterrahmen 2a aufgespannten Ebene abweichen, so dass die Orientierung der Drehachsen 11 an dem Unterrahmen 2a erfolgt. Je nach Ausführung des Windschotts 1 können jedoch die durch den Oberrahmen 2b und den Unterrahmen 2a aufgespannten Ebenen auch zusammenfallen, so dass die Drehachsen 11 jeweils die gleiche Orientierung zum Oberrahmen 2b und zum Unterrahmen 2a haben.

Die Erfindung kann jedoch ebenso mit herkömmlichen Windschotts, welche ein Doppelgelenk im Oberrahmen 2b aufweisen, ausgeführt werden. Sowohl die Querstreben 15 wie auch die Querstreben 16 liegen bei diesen Ausführungen im abgelegten Zustand des Oberrahmens 2b auf dem Unterrahmen 2a aufeinander, wobei das gleichzeitige Klappen bzw. der zusätzliche Platzbedarf für den innenliegenden Rahmen, meistens den Unterrahmen 2a, durch das Doppelgelenk geschaffen wird.

Um das Windschott 1 in seiner in das Kraftfahrzeug 4 eingebauten Gebrauchsposition zu stabilisieren, sind weiterhin noch zwei gelenkig miteinander verbundene Verriegelungselemente 14 an dem Unterrahmen 2a angeordnet. Die Verriegelungselemente 14 sind vorliegend in ihrer Verriegelungsstellung gezeigt, in welcher sie das Klappgelenk 8 des Unterrahmens blockieren. Nach Schwenken der Verriegelungselemente 14 um 90° erstrecken sich die Verriegelungselemente 14 schließlich nicht mehr senkrecht zu dem Unterrahmen 2a, sondern liegen in einer Ebene mit diesem, wobei die gelenkige Verbindung der Verriegelungselemente 14 dann dieselbe Drehachse aufweist wie das Klappgelenk 8. Zur näheren Ausführung der Verriegelungselemente 14 wird auf die DE 10 2006 030 076 A1 verwiesen.

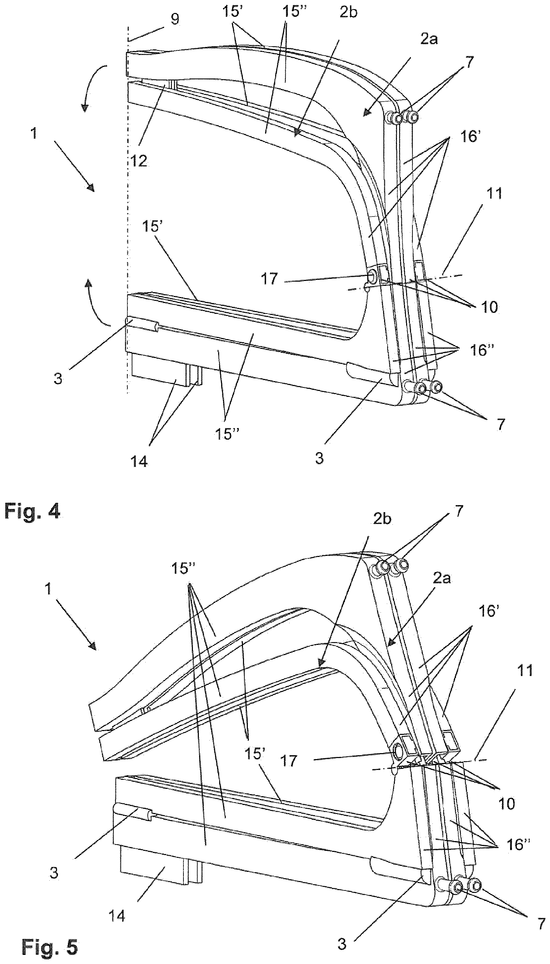

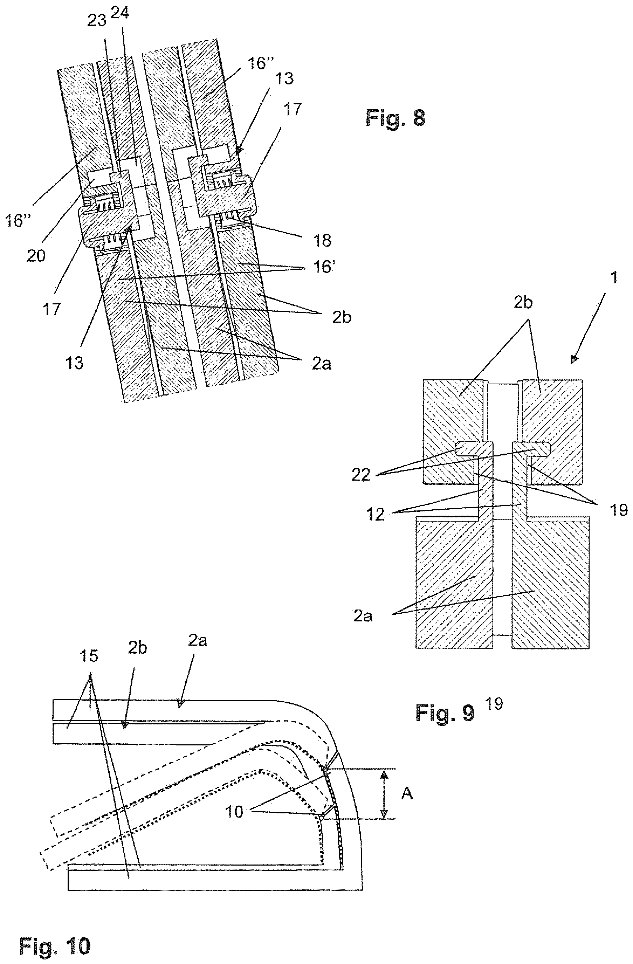

Figur 4 zeigt nun das Windschott der Figur 3 in einem um die Klappachse 9 zusammengeklappten Zustand. Sämtliche Seitenstreben 16 sowohl des Oberrahmens 2b wie auch des Unterrahmens 2a liegen hierbei aufeinander, wobei die Drehachse 11 der Gelenke 10 wiederum koaxial verläuft. Die einander gegenüberliegenden Querabschnitte der Querstreben 15 können nun, wie vorliegend durch die Pfeile symbolisiert, durch Drehen um die Drehachse 10 Bereich der Klappgelenke 8 aufeinander zu bewegt werden und in eine besonders platzsparende Aufbewahrstellung bewegt werden. Wie in Figur 9 dargestellt, sind dabei der Oberrahmen 2b und der Unterrahmen 2a durch Mitnehmer 22 miteinander verbunden, so dass das Einfalten besonders komfortabel erfolgt.

Die vollständig eingedrehte Aufbewahrstellung des Windschotts 1 ist Figur 5 dargestellt. Wie durch einen Vergleich der Figur 5 mit der Figur 4 ersichtlich, kann hierdurch ein wesentlich geringeres Verstaumaß des Windschotts 1 erreicht werden. Das Eindrehen der einander gegenüberliegenden Querabschnitte 15', 15" der Querstreben 15 ist nach der vorliegenden Ausführung durch die aufeinander anschlagenden Querabschnitte 15', 15" im Bereich der Gelenke 8 begrenzt. Insgesamt kann durch das zusätzliche Eindrehen um die Drehachse 11 ein bis zu 40% geringeres Verstauvolumen des Windschotts 1 erreicht werden. Die Handhabung des Windschotts 1 ist hierbei dennoch besonders einfach, da insbesondere auch durch die Abstützung 12 mit den Mitnehmern 22 das Windschott 1 mit einem einzigen Handgriff gefaltet werden kann.

Um die Handhabung des Windschotts 1 zu erleichtern und weiterhin das Windschott 1 in seiner Gebrauchsposition zu stabilisieren, kann eine Verriegelungseinrichtung 13 für die Gebrauchsposition des Windschotts 1 vorgesehen werden. Diese hält im Betrieb des Windschotts 1 die durch die weiteren Gelenke 10 miteinander verbundenen Strebenabschnitte, vorliegend die Seitenabschnitte 16' und 16" der Seitenstreben 16 in ihrer ausgeklappten Position. Die Verriegelungseinrichtung 13 kann eine Betätigungseinrichtung 17, welche vorliegend als Druckkopf ausgeführt ist, aufweisen. Zum Eindrehen des um die Klappachse 8 zusammengeklappten Windschotts 1 um die Drehachse 10 muss der Bediener daher zunächst die Betätigungseinrichtung 17 betätigen, um die Verriegelungseinrichtung 13 frei zu geben. Die Verriegelungseinrichtung 13 wird in Figur 8 näher beschrieben.

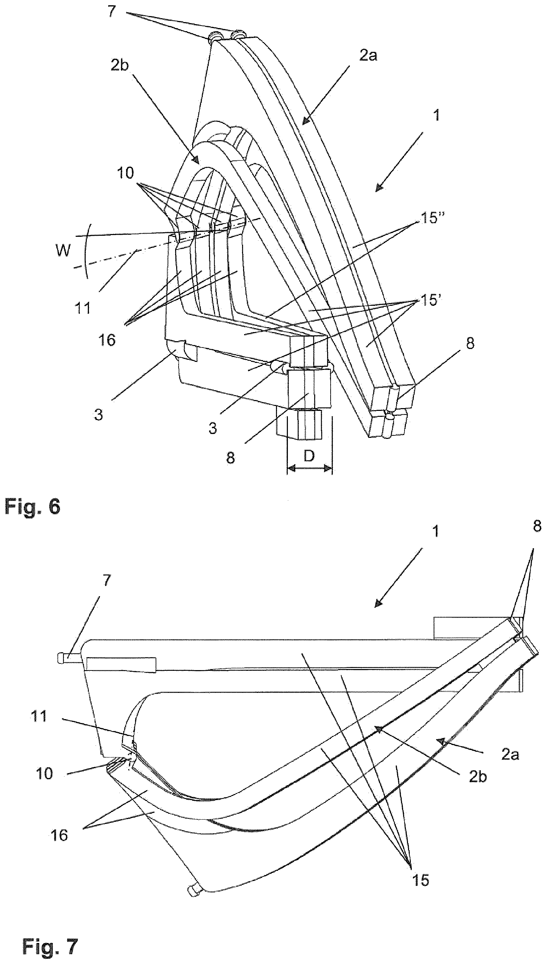

Figur 6 zeigt eine andere Ausführung eines erfindungsgemäßen Windschotts 1 in seiner vollständig eingedrehten Aufbewahrposition. Im Unterschied zu der in den Figuren 3-5 gezeigten Ausführung ist die Drehachse 11 der weiteren Gelenke 10 dabei nicht senkrecht zu der durch die Rahmen 2a, 2b und das Flachmaterial 6 aufgespannten Ebene, sondern ist in einem spitzen Winkel W von vorzugsweise bis zu 20° gegenüber der Senkrechten geneigt. Wie der Figur 6 entnehmbar, wird durch diese Schrägstellung der Drehachse 11 erreicht, dass die einander gegenüberliegenden Querabschnitte 15', 15" der Querstreben 15 beim Eindrehen um die Drehachse 11 aus der ursprünglichen, durch den Rahmen 2 aufgespannten Ebene herausschwenkt werden, so dass die Querabschnitte 15 noch weiter zueinander gedreht werden können. Hierdurch kann gegenüber der Ausführung der Figur 5 ein noch einmal reduziertes Verstauvolumen des Windschotts 1 erzielt werden. Im Bereich der Klappgelenke 8 wird jedoch durch die nun nebeneinander liegenden Querabschnitte der Querstreben 15 die doppelte Rahmendicke D benötigt.

Figur 7 zeigt das Windschott 1 der Figur 6 im vollständig eingedrehten Zustand seiner Aufbewahrposition in einer Draufsicht. Gut erkennbar ist hier wiederum die Schrägstellung der Achse 11 sowie das Aufeinanderliegen der Querabschnitte 15', 15" der Querstreben 15 im Bereich der Klappgelenke 8.

Figur 8 zeigt eine Detaildarstellung der Verriegelungseinrichtung 13 in einer Schnittdarstellung. Gezeigt ist ein Ausschnitt aus einem vollständig zusammengeklappten Windschott 1, bei welchem die Seitenstreben 16 wie zuvor beschrieben aufeinanderliegen. Die Verriegelungseinrichtung 13 ist hierbei an einem ersten Querabschnitt 16' angeordnet und greift mit einem Sperrelement 23 in eine entsprechend ausgeformte Aussparung 20 des anderen Querabschnittes 16". Die Verriegelungseinrichtung 13 ist durch eine Feder 18 belastet und hierdurch in der vorliegend dargestellten Verriegelungsposition stabilisiert. Zum Entriegeln weist die Verriegelungseinrichtung 13 eine Betätigungseinrichtung 17, vorliegend einen Druckkopf, auf. Zum Entriegeln muss durch den Bediener der Druckkopf bzw. die Betätigungseinrichtung 17

in Pfeilrichtung gegen die Federkraft betätigt werden, so dass das Sperrelement 23 außer Eingriff mit der Aussparung 20 gelangt und die Fixierung der Querabschnitte 16' und 16" zueinander aufhebt. Um das Verschieben des Sperrelementes 23 in Pfeilrichtung zu ermöglichen, sind die Seitenstreben 16 des innenliegenden Unterrahmens 2a jeweils mit einer Vertiefung 24 versehen. Durch die Feder 18 wird weiterhin erreicht, dass beim Aufspannen des Windschotts 1 aus seiner Aufbewahrposition in Richtung der Gebrauchsposition das Sperrelement 23 selbsttätig in die Aussparung 20 einrastet.

Alternativ oder zusätzlich zu der in Figur 8 dargestellten Verriegelungseinrichtung 13 kann auch vorgesehen sein, die beiden durch das Gelenk 10 verbundenen Strebenabschnitte, beispielsweise die Strebenabschnitte 16' und 16", im Bereich der Drehachse 11 durch eine Feder zu verbinden. Hierdurch kann erreich werden, dass beim Auffalten des Windschotts 1 aus seiner Aufbewahrposition die Strebenabschnitte in ihre Gebrauchsposition gedrückt werden und weiterhin in der Gebrauchsstellung durch die Federkraft stabilisiert werden. Weiterhin kann auch für die Aufbewahrposition eine Verriegelungseinrichtung. Das Handling des Windschotts 1 in der Aufbewahrposition kann hierdurch erleichtert werden.

Vorliegend ist eine Verriegelungseinrichtung 13 lediglich am Oberrahmen 2b vorgesehen. Ebenso ist jedoch auch möglich, zusätzlich eine Verriegelungseinrichtung 13 im Unterrahmen 2a vorzusehen. In besonders vorteilhafter Ausgestaltung kann hierbei die Verriegelungseinrichtung 13 des außenliegenden Oberrahmens 2b zugleich auch die innenliegende Verriegelungseinrichtung 13 des Unterrahmens 2a betätigen. Beispielsweise kann hierzu das Sperrelement 23 auf einen im Unterrahmen 2a angeordneten Taster drücken.

Figur 9 zeigt eine Detaildarstellung der Abstützung 12 sowie der Mitnehmer 22 in einer Schnittdarstellung, bei welchem der Oberrahmen 2b auf dem Unterrahmen 2a bzw. der Abstützung 12 abgelegt ist. Die Abstützungen 12 greifen dabei in eine entsprechend ausgeformte Ausnehmung 19 des Oberrahmens 2b ein. Für einen besonders guten Halt sowie eine besonders gute Führung des Oberrahmens 2b an dem Unterrahmen 2a auch während des Überführens in die Aufbewahrposition durch Eindrehen weisen die Abstützungen 12 als Vorsprünge ausgebildete Mitnehmer 22 auf, welche wiederum im Eingriff mit den Ausnehmungen 19 des Oberrahmens 2b stehen und beim Eindrehen der Strebenabschnitte des Unterrahmens 2a zugleich die entsprechenden Strebenabschnitte des Oberrahmens 2b mitnehmen. Wie in Verbindung mit den Figuren 4 und 7 ersichtlich, werden durch den Vorsprung 22 die Querabschnitte der Querstreben 15 des Oberrahmens 2b und des Unterrahmens 2a nach Ablegen des Oberrahmens 2b auf dem Unterrahmen 2a zueinander fixiert, so dass zum Einfalten des Windschotts 1 in die Aufbewahrposition um die Drehachse 11 lediglich die Querstreben 15 des Unterrahmens 2a bedient werden müssen.

Figur 10 zeigt schließlich noch eine alternative Ausführung eines Windschotts 1, bei welchem im Gegensatz zu den zuvor beschriebenen Ausführungen im abgelegten Zustand des Oberrahmens 2b auf dem Unterrahmen 2a die Drehachsen 11 der Gelenke 10 nicht koaxial zueinander sind, sondern vielmehr bezogen auf die Längsrichtung der Seitenstreben 16 einen Abstand A zueinander aufweisen. Die Seitenstreben 16 des Oberrahmens 2b und die Seitenstreben 16 des Unterrahmens 2a liegen dabei in abgelegtem Zustand des Oberrahmens 2b auf dem Unterrahmen 2a nicht aufeinander wie bei den zuvor beschriebenen Ausführungen, sondern nebeneinander. Ein derartiges Windschott 1 weist daher eine vergleichsweise geringe Bautiefe auf, da lediglich die doppelte Rahmendicke D und nicht, wie in den Figuren 4 und 6 ersichtlich, die vierfache Rahmendicke D benötigt wird. Durch die beabstandet zueinander angeordneten Drehachsen 11 ist es dennoch möglich, die einander gegenüberliegenden Querabschnitte der Querstreben 15 des Windschotts 1 um ihre jeweiligen Drehachsen 11 einzudrehen und hierdurch eine platzsparende Aufbewahrposition zu erzielen.

Zum Überführen des Windschotts 1 in die Aufbewahrposition müssen dabei zunächst die innenliegenden Querabschnitte der Querstreben 15 des Oberrahmens 2b eingedreht werden und erst anschließend können die außenliegenden Querabschnitte der Querstreben 15 des Unterrahmens 2a betätigt werden. Um den Bedienkomfort zu erhöhen, kann jedoch auch bei dieser Ausführung ein Mitnehmer 22 vorgesehen sein, wobei beispielsweise ein hervorstehender Knopf des Oberrahmens 2b in einer entsprechend ausgebildeten Kulisse des Unterrahmens 2a gleiten kann, so dass ein gleichzeitiges Einschwenken der Querstreben 15 des Oberrahmens 2b und des Unterrahmens 2a möglich ist.

Die punktierten Linien in der Figur 10, welche sich vorliegend entlang der Innenkonturen des Oberrahmens 2b und des Unterrahmens 2a erstrecken, symbolisieren den Verlauf eines Keders zur Befestigung des Flachmaterials 6 an den Rahmen 2a, 2b. Verläuft der Keder wie vorliegend bezogen auf die Drehachse 11 des Gelenks 10 entlang der inneren Rahmenkontur, so wird beim Einfalten der Querstreben 15 um die Drehachse 11 der Keder im Gelenkbereich geringfügig gestaucht. Es ist jedoch ebenso möglich, den Keder auf der anderen Seite des Gelenks 10, also eher entlang der äußeren Rahmenkonturen zu führen, so dass dieser beim Einfalten dann entsprechend gedehnt wird. Die geeignete Führung des Keders hängt dabei in erster Linie von der Lage der Drehachse 11 an dem Rahmen 2 ab.

Die Erfindung ist nicht auf die dargestellten Ausführungsbeispiele beschränkt. Weitere Kombinationen im Rahmen der Patentansprüche fallen ebenfalls unter die Erfindung.

### Bezuaszeichenliste

- 1: Windschott
- 2: Rahmen
- 2a: Unterrahmen
- 2b: Oberrahmen
- 3: Scharnier
- 4: Personenkraftfahrzeug
- 5: Schwenkachse der Scharniere 3
- 6: Flachmaterial
- 7: Fixiereinrichtungen
- 8: Klappgelenk
- 9: Klappachse der Klappgelenke 8
- 10: Weiteres Gelenk
- 11: Drehachse des weiteren Gelenks 10
- 12: Abstützung
- 13: Verriegelungseinrichtung
- 14: Verriegelungselemente
- 15: Querstrebe
- 15', 15": Querabschnitte
- 16: Seitenstrebe
- 16', 16": Seitenabschnitte
- 17: Betätigungseinrichtung
- 18: Feder
- 19: Ausnehmung
- 20: Aussparung
- 22: Mitnehmer
- 23: Sperrelement
- 24: Vertiefung

- W: spitzer Winkel
- A: Abstand

## Patentansprüche

1. Windschott (1) für ein Personenkraftfahrzeug (4), umfassend zumindest einen Rahmen (2) und ein an dem Rahmen (2) befestigtes Flachmaterial (6), wobei der zumindest eine Rahmen (2) zwei einander gegenüberliegende erste Streben aufweist, sowie zwei die beiden ersten Streben miteinander verbindende, einander gegenüberliegende zweite Streben, wobei im Wesentlichen mittig in den ersten Streben jeweils ein Klappgelenk (8) angeordnet ist, welches die ersten Streben in jeweils zwei erste Strebenabschnitte unterteilt, so dass der Rahmen (2) um eine die beiden Klappgelenke (8) verbindende Klappachse (9) auf die Hälfte seiner ursprünglichen Abmessungen zusammenklappbar ist, wobei in jeder der zweiten Streben jeweils ein weiteres Gelenk (10) angeordnet ist, welches die zweiten Streben in zwei zweite Strebenabschnitte unterteilt, **dadurch gekennzeichnet, dass** die Drehachse (11) des weiteren Gelenks (10) sich außerhalb einer durch den Rahmen (2) und das Flachmaterial (6) aufgespannten Ebene erstreckt, wobei die Drehachse (11) des weiteren Gelenks (10) sich senkrecht zu einer durch den Rahmen (2) und das Flachmaterial (6) aufgespannten Ebene erstreckt oder dass die Drehachse (11) der Gelenke in einem spitzen Winkel (W) von bis zu 20° gegenüber der Senkrechten auf die durch den Rahmen (2) und das Flachmaterial (6) aufgespannte Ebene geneigt ist, so dass nach Klappung um die Klappachse (9) die einander gegenüber liegenden ersten Strebenabschnitte des Rahmens (2) durch Drehung um die Drehachse (11) in eine platzsparende Aufbewahrstellung zueinander drehbar sind.

2. Windschott nach dem vorhergehenden Anspruch, **dadurch gekennzeichnet, dass** bei um die Klappachse (9) zusammengeklapptem Rahmen (2) des Windschotts (1) die Drehachsen (11) der Gelenke (10) in den zweiten Streben koaxial sind.

3. Windschott nach einem der vorhergehenden Ansprüche, **dadurch gekennzeichnet, dass** die ersten Streben sich in Einbauposition des Windschotts (1) im Personenkraftfahrzeug (4) im Wesentlichen in y-Richtung erstreckende Querstreben (15) sind, welche durch die Klappgelenke (8) in jeweils zwei Querabschnitte (15', 15") unterteilt sind, und dass die zweiten Streben die Querstreben (15) verbindende Seitenstreben (16) sind, welche durch die Gelenke (10) in jeweils zwei Seitenabschnitte (16', 16") unterteilt sind.

4. Windschott nach einem der vorhergehenden Ansprüche, **dadurch gekennzeichnet, dass** die beiden durch das Gelenk (10) verbundenen Strebenabschnitte durch eine Feder miteinander verbunden sind, wobei die Feder vorzugsweise dem Drehen in die Aufbewahrstellung entgegenwirkt.

5. Windschott nach einem der vorhergehenden Ansprüche, **dadurch gekennzeichnet, dass** das Windschott (1) zwei Rahmen (2) aufweist, die um eine Schwenkachse (5) zueinander schwenkbar sind, um den ersten Rahmen (2) auf dem zweiten Rahmen (2) abzulegen.

6. Windschott nach dem vorhergehenden Anspruch, **dadurch gekennzeichnet, dass** das Windschott (1) einen Oberrahmen (2b) und einen Unterrahmen (2a) aufweist, die um eine Schwenkachse (5) zueinander schwenkbar sind, um den Oberrahmen (2b) auf dem Unterrahmen (2a) abzulegen

7. Windschott nach dem vorhergehenden Anspruch, **dadurch gekennzeichnet, dass** in einem abgelegten Zustand des Oberrahmens (2b) auf dem Unterrahmen (2a) die Seitenstreben (16) des Oberrahmens (2b) und des Unterrahmens (2a) aufeinander liegen und dass die Drehachsen (11) der Gelenke (10) des Oberrahmens (2b) und die Drehachsen (11) der Gelenke (10) des Unterrahmens (2a) koaxial zueinander sind.

8. Windschott nach einem der Ansprüche 6 oder 7, **dadurch gekennzeichnet, dass** in einem abgelegten Zustand des ersten Rahmens (2), vorzugsweise des Oberrahmens (2b), auf dem zweiten Rahmen (2), vorzugsweise dem Unterrahmen (2a), die Außenkontur des ersten Rahmens (2) sich zumindest überwiegend innerhalb der Außenkontur des zweiten Rahmens (2) befindet.

9. Windschott nach einem der Ansprüche 6 - 8, **dadurch gekennzeichnet, dass** das Klappgelenk (8) des Unterrahmens (2a) und des Oberrahmens (2b) jeweils als Einfachgelenk ausgeführt ist, wobei zumindest die Querabschnitte (15', 15") der Querstreben (15) des Oberrahmens (2b) zumindest im abgelegten Zustand des Oberrahmens (2b) auf dem Unterrahmen (2a) einen Winkel von weniger als 180° miteinander bilden.

10. Windschott nach einem der Ansprüche 6 - 9, **dadurch gekennzeichnet, dass** der zweite Rahmen (2), vorzugsweise der Unterrahmen (2a), zumindest im Bereich des Klappgelenks (8) eine Abstützung (12) für den ersten Rahmen (2), vorzugsweise den Oberrahmen (2b), aufweist, wobei vorzugsweise die Abstützung des Unterrahmens (2a) als Mitnehmer (22) für den Oberrahmen (2b) ausgeführt ist, welcher bei Drehung der Strebenabschnitte, insbesondere der Querabschnitte (15', 15"), des Unterrahmens (2a) um die Drehachse (11) die Strebenabschnitte, insbesondere die Querabschnitte (15', 15"), des Oberrahmens (2b) mitnimmt.

11. Windschott nach einem der Ansprüche 6 - 10, **dadurch gekennzeichnet, dass** zumindest das Klappgelenk (8) eines Rahmens (2), vorzugsweise des Oberrahmens (2b), als Doppelgelenk ausgeführt ist.

12. Windschott nach einem der Ansprüche 6 - 11, **dadurch gekennzeichnet, dass** in einem abgelegten Zustand des Oberrahmens (2b) auf dem Unterrahmen (2a) die Seitenstreben (16) des Oberrahmens (2b) und die Seitenstreben (16) des Unterrahmens (2a) nebeneinander liegen und dass die Drehachsen (11) der Gelenke (10) des Oberrahmens (2b) und die Drehachsen (11) der Gelenke (10) des Unterrahmens (2a) bezogen auf die Längsrichtung der Seitenstreben (16) einen Abstand (A) zueinander aufweisen.

13. Windschott nach einem der Ansprüche 6 - 12, **dadurch gekennzeichnet, dass** die weiteren Gelenke (10) des Rahmens (2), zumindest die weiteren Gelenke (10) des Oberrahmens (2b), eine Verriegelungseinrichtung (13), vorzugsweise eine federbelastete und selbsttätig verriegelbare Verriegelungseinrichtung (13), aufweisen.

14. Windschott nach dem vorhergehenden Anspruch, **dadurch gekennzeichnet, dass** die Verriegelungseinrichtung (13) eine Betätigungseinrichtung (17) zum Entriegeln der Verriegelungseinrichtung (13) aufweist.

## Claims

1. A windblocker (1) for a passenger car (4), comprising at least one frame (2) and one flat material (6) attached to the frame (2), the at least one frame (2) comprising two first struts opposite each other and two second struts opposite each other and connecting the two first struts to each other, one folding joint (8) being disposed substantially in the center of each of the first struts and dividing each of the first struts into two first strut segments, so that the frame (2) can be folded together to half the original dimensions thereof about the folding axis (9) connecting the two folding joints (8), a further joint (10) being disposed in each of the two second struts and dividing the second struts into two second strut segments, **characterized in that** the axis of rotation (11) of the further joint (10) extending outside of a plane through the frame (2) and the flat material (6), the axis of rotation (11) of the further joint (10) extending perpendicular to a plane through the frame (2) and the flat material (6), or that the axis of rotation (11) of the joints is inclined relative to the vertical to the plane through the frame (2) and the flat material (6) by an acute angle (W) of up to 20°, so that when folded about the folding axis (9), the first strut segments of the frame (2) opposite each other can be rotated toward each other into a space-saving storage position by rotating about the axis of rotation (11).

2. The windblocker according to the preceding claim, **characterized in that** when the frame (2) of the windblocker (1) is folded together about the folding axis (9), the axes of rotation (11) of the joints (10) in the second struts are coaxial.

3. The windblocker according to any one of the preceding claims, **characterized in that** the first struts are transverse struts (15) extending substantially in the Y direction when the windblocker (1) is in the installed position in the passenger car (4) and are divided by the folding joints (8) into two transverse segments (15', 15") each, and that the second struts are side struts (16) connecting the transverse struts (15) and being divided by the joints (10) into two side segments (16', 16") each.

4. The windblocker according to any one of the preceding claims, **characterized in that** the two strut segments connected by the joint (10) are connected to each other by a spring, wherein the spring preferably acts opposite to the rotation into the storage position.

5. The windblocker according to any one of the preceding claims, **characterized in that** the windblocker (1) comprises two frames (2) pivotable toward each other about a pivot axis (5) in order to place the first frame (2) on the second frame (2).

6. The windblocker according to the preceding claim, **characterized in that** the windblocker (1) comprises a top frame (2b) and a bottom frame (2a) pivotable toward each other about a pivot axis (5) in order to place the top frame (2b) on the bottom frame (2a).

7. The windblocker according to the preceding claim, **characterized in that** the side struts (16) of the top frame (2b) and of the bottom frame (2a) lie one on top of the other in a stored state of the top frame (2b) on the bottom frame (2a), and that the axes of rotation (11) of the joints (10) of the top frame (2b) and the axes of rotation (11) of the joints (10) of the bottom frame (2a) are coaxial to each other.

8. The windblocker according to any one of the claims 6 or 7, **characterized in that** the outer contour of the first frame (2) is present at least predominantly within the outer contour of the second frame (2) in a stored state of the first frame (2), preferably of the top frame, (2b) on the second frame (2), preferably the bottom frame (2a).

9. The windblocker according to any one of the claims 6 through 8, **characterized in that** the folding joints (8) of the bottom frame (2a) and of the top frame (2b) are each implemented as a simple joint, wherein at least the transverse segments (15', 15") of the transverse struts (15) of the top frame (2b) form an angle of less than 180° to each other at least in the stored state of the top frame (2b) on the bottom frame (2a).

10. The windblocker according to any one of the claims 6 through 9, **characterized in that** the second frame (2), preferably the bottom frame (2a), comprises a support (12) for the first frame (2), preferably the top frame (2b), at least in the region of the folding joint (8), wherein the support of the bottom frame (2a) is preferably implemented as a driver (22) for the top frame (2b) and drives the strut segments, particularly the transverse segments (15', 15"), of the top frame (2b) when the strut segments, particularly the transverse segments (15', 15"), of the bottom frame (2a) are rotated about the axis of rotation (11).

11. The windblocker according to any one of the claims 6 through 10, **characterized in that** at least the folding joint (8) of a frame (2), preferably of the top frame (2b), is implemented as a double joint.

12. The windblocker according to any one of the claims 6 through 11, **characterized in that** the side struts (16) of the top frame (2b) and the side struts (16) of the bottom frame (2a) lie adjacent to each other in a stored state of the top frame (2b) on the bottom frame (2a), and that the axes of rotation (11) of the joints (10) of the top frame (2b) and the axes of rotation (11) of the joints (10) of the bottom frame (2a) comprise a spacing (A) apart from each other relative to the longitudinal direction of the side struts (16).

13. The windblocker according to any one of the claims 6 through 12, **characterized in that** the further joints (10) of the frame (2), at least the further joints (10) of the top frame (2b), comprise a locking device (13), preferably a spring-loaded and self-locking locking device (13).

14. The windblocker according to the preceding claim, **characterized in that** the locking device (13) comprises an actuator (17) for unlocking the locking device (13).

## Revendications

1. Coupe-vent (1) pour une voiture particulière (4), comprenant au moins un cadre (2) et un matériau plat (6) fixé sur le cadre (2), dans lequel l'au moins un cadre (2) comporte deux premiers croisillons disposés l'un en face l'autre, ainsi que deux seconds croisillons disposés l'un en face l'autre et reliant l'un avec l'autre les deux premiers croisillons, dans lequel une articulation de repliement (8) est disposée respectivement à une position essentiellement centrale dans les premiers croisillons, laquelle divise les premiers croisillons en respectivement deux premières section de croisillon, de manière à ce que le cadre (2) soit repliable à la moitié de ses dimensions initiales autour d'un axe de repliement (9) reliant les deux articulations de repliement (8), dans lequel une articulation supplémentaire (10) est disposée respectivement dans chacun des seconds croisillons, laquelle divise les secondes croisillons en deux secondes sections de croisillon, **caractérisé en ce que** l'axe de rotation (11) de l'articulation supplémentaire (10) s'étende en dehors d'un plan tendu par le cadre (2) et le matériau plan (6), dans lequel l'axe de rotation (11) de l'articulation supplémentaire (10) s'étend perpendiculairement à un plan tendu par le cadre (2) et le matériau plat (6), ou que l'axe de rotation (11) des articulations est incliné d'un angle aigu (W) de jusqu'à 20° par rapport à la verticale sur le plan tendu par le cadre (2) et le matériau plat (6), de manière à ce qu'après le repliement autour de l'axe de repliement (9), les premières sections de croisillon disposées l'une en face de l'autre du cadre (2) puissent être tournées dans une position de rangement peu encombrante par rotation autour de l'axe de rotation (11).

2. Coupe-vent selon la revendication précédente, **caractérisé en ce que** dans la position repliée du cadre (2) du coupe-vent (1) autour de l'axe de repliement (9), les axes de rotation (11) des articulations (10) dans les seconds croisillons sont coaxiaux.

3. Coupe-vent selon l'une des revendications précédentes, **caractérisé en ce que** les premiers croisillons, dans la position de montage du coupe-vent (1) dans la voiture particulière (4), sont essentiellement des entretoises transversales (15) s'étendant dans le sens y, lesquelles sont divisés respectivement en deux sections transversales (15', 15") par les articulations de repliement (8), et que les seconds croisillons sont des croisillons latéraux (16) reliant les entretoises transversales (15), lesquels sont divisés respectivement en deux sections latérales (16', 16") par les articulations (10).

4. Coupe-vent selon l'une des revendications précédentes, **caractérisé en ce que** les deux sections de croisillon reliées par l'articulation (10) sont reliées l'une avec l'autre par un ressort, sachant que le ressort s'oppose de préférence à la rotation dans la position de rangement.

5. Coupe-vent selon l'une des revendications précédentes, **caractérisé en ce que** le coupe-vent (1) comporte deux cadres (2), qui peuvent être pivotés l'un vers l'autre autour d'un axe de pivotement (5) afin de déposer le premier cadre (2) sur le second cadre (2).

6. Coupe-vent selon la revendication précédente, **caractérisé en ce que** le coupe-vent (1) comporte un cadre supérieur (2b) et un cadre inférieur (2a), qui sont pivotants l'un vers l'autre autour d'un axe de pivotement (5) afin de déposer le cadre supérieur (2b) sur le cadre inférieur (2a).

7. Coupe-vent selon la revendication précédente, **caractérisé en ce que**, dans un état déposé du cadre supérieur (2b) sur le cadre inférieur (2a), les croisillons latéraux (16) du cadre supérieur (2b) et du cadre inférieur (2a) sont posés les uns sur les autres et que les axes de rotation (11) des articulations (10) du cadre supérieur (2b) et les axes de rotation (11) des articulations (10) du cadre inférieur (2a) sont coaxiaux les uns par rapport au autres.

8. Coupe-vent selon l'une des revendications 6 ou 7, **caractérisé en ce que**, dans un état déposé du premier cadre (2), de préférence du cadre supérieur (2b), sur le second cadre (2), de préférence sur le cadre inférieur (2a), le contour extérieur du premier cadre (2) se situe au moins en majeure partie à l'intérieur du contour extérieur du second cadre (2).

9. Coupe-vent selon l'une des revendications 6 - 8, **caractérisé en ce que** l'articulation de repliement (8) du cadre inférieur (2a) et du cadre supérieur (2b) se présente respectivement sous la forme d'une articulation simple, sachant qu'au moins les sections transversales (15', 15') des entretoises transversales (15) du cadre supérieur (2b) forment les unes par rapport aux autres un angle de moins de 180° au moins dans la position déposée du cadre supérieur (2b) sur le cadre inférieure (2a).

10. Coupe-vent selon l'une des revendications 6 - 9, **caractérisé en ce que** le second cadre (2), de préférence le cadre inférieur (2a), comporte au moins dans la zone de l'articulation de repliement (8) un appui (12) pour le premier cadre (2), de préférence le cadre supérieur (2b), sachant que, de préférence, l'appui du cadre inférieur (2a) se présente sous la forme d'un élément d'entraînement (22) pour le cadre supérieur (2b), lequel élément d'entraînement entraîne les sections de croisillon, en particulier les sections transversales (15', 15"), du cadre supérieur (2b) lors de la rotation des sections de croisillon, en particulier des sections transversales (15', 15"), du cadre inférieur (2a) autour de l'axe de rotation (11).

11. Coupe-vent selon l'une des revendications 6 - 10, **caractérisé en ce qu'**au moins l'articulation de repliement (8) du cadre (2), de préférence du cadre supérieur (2b), se présente sous la forme d'une double articulation.

12. Coupe-vent selon l'une des revendications 6 - 11, **caractérisé en ce que**, dans un état déposé du cadre supérieur (2b) sur le cadre inférieur (2a), les croisillons latéraux (16) du cadre supérieur (2b) et les croisillons latéraux (16) du cadre inférieur (2a) sont posés les uns à côtés des autres et que les axes de rotation (11) des articulations (10) du cadre supérieur (2b) et les axes de rotation (11) des articulations (10) du cadre inférieur (2a) présentent une distance (A) des uns aux autres par rapport au sens longitudinal des croisillons latéraux (16).

13. Coupe-vent selon l'une des revendications 6 - 12, **caractérisé en ce que** les articulations supplémentaires (10) du cadre (2), au moins les articulations supplémentaires (10) du cadre supérieur (2b), comportent un dispositif de verrouillage (13), de préférence un dispositif de verrouillage (13) soumis à l'action d'un ressort et à verrouillage automatique.

14. Coupe-vent selon la revendication précédente, **caractérisé en ce que** le dispositif de verrouillage (13) comporte un dispositif d'actionnement (17) pour le déverrouillage du dispositif de verrouillage (13).
